# EUROPÄISCHE PATENTSCHRIFT

(11) **EP 3 335 856 B1**
(45) Veröffentlichungstag und Bekanntmachung des Hinweises auf die Patenterteilung: **24.05.2023**
(21) Anmeldenummer: 17178640.3
(22) Anmeldetag: 29.06.2017
(51) Int. Cl.: B29C 64/153, B29C 64/268, B29C 64/30, B29C 64/393, B33Y 10/00, B33Y 30/00, B33Y 40/00, B33Y 50/00, G02B 26/00, B33Y 50/02, B22F 10/38, B22F 12/44, B22F 12/45, B22F 12/90

(54) **BELICHTUNGSEINRICHTUNG FÜR EINE VORRICHTUNG ZUR ADDITIVEN HERSTELLUNG DREIDIMENSIONALER OBJEKTE**
EXPOSURE DEVICE FOR AN APPARATUS FOR ADDITIVE MANUFACTURING OF THREE-DIMENSIONAL OBJECTS
DISPOSITIF D'EXPOSITION POUR UN DISPOSITIF DE FABRICATION ADDITIVE D'OBJETS TRIDIMENSIONNELS

(30) Priorität: 16.12.2016 DE 102016124695
(43) Veröffentlichungstag der Anmeldung: 20.06.2018
(73) Patentinhaber: Concept Laser GmbH, 96215 Lichtenfels (DE)
(72) Erfinder: Stammberger, Jens, 96472 Rödental (DE); Döhler, Tim, 96269 Großheirath (DE); Diller, Christian, 96215 Lichtenfels (DE); EBERT, Marie-Christin, 96450 Coburg (DE)
(74) Vertreter: Hafner & Kohl PartmbB

(56) Entgegenhaltungen:
- WO-A1-2018/086996
- DE-A1-102012 221 218
- DE-B3-102015 012 565
- US-A- 5 387 969
- US-A- 6 054 192
- US-A1- 2006 215 246
- US-A1- 2009 060 386

## Beschreibung

Die Erfindung betrifft eine Belichtungseinrichtung für eine Vorrichtung zur additiven Herstellung dreidimensionaler Objekte durch sukzessives schichtweises selektives Belichten und damit einhergehendes Verfestigen von Baumaterialschichten aus einem verfestigbaren Baumaterial vermittels eines Energiestrahls, wobei die Belichtungseinrichtung eine Energiestrahlerzeugungseinrichtung, welche zur Erzeugung eines Energiestrahls eingerichtet ist, eine Strahlablenkeinrichtung, welche zur Ablenkung eines von der Energiestrahlerzeugungseinrichtung erzeugten Energiestrahls auf einen bestimmten Einstrahlort eingerichtet ist, sowie einen durch wenigstens ein optisch leitfähiges Element gebildeten oder wenigstens ein solches umfassenden Strahlengang, wobei die Energiestrahlerzeugungseinrichtung und die Strahlablenkeinrichtung über den Strahlengang optisch miteinander gekoppelt sind, umfasst.

Die Verwendung entsprechender Belichtungseinrichtungen ist im Bereich der additiven Herstellung dreidimensionaler Objekte dem Grunde nach bekannt.

Wesentlich für einen jeweiligen additiven Bauvorgang ist die exakte Positionierung der der Belichtungseinrichtung zugehörigen, regelmäßig auch als Scannereinrichtungen bezeichneten Strahlablenkeinrichtungen, relativ zu der Bauebene. Eine Herausforderung besteht darin, die exakte Positionierung der Strahlablenkeinrichtung relativ zu der Bauebene auch während der Durchführung additiver Bauvorgänge zu gewährleisten. Insbesondere kann die während der Durchführung additiver Bauvorgänge entstehende Wärme eine gewisse Ausdehnung diverser Funktionskomponenten bedingen, was in einer Änderung der Positionierung der Strahlablenkeinrichtung relativ zu der Bauebene resultieren kann.

Um gegebenenfalls erforderliche Korrekturen der Positionierung der Strahlablenkeinrichtung bzw. gegebenenfalls der gesamten Belichtungseinrichtung vorzunehmen, ist eine exakte Kenntnis der aktuellen Positionierung der Strahlablenkeinrichtung notwendig.

US2009/060386 A1 offenbart eine Belichtungseinrichtung für eine Vorrichtung zur additiven Herstellung dreidimensionaler Objekte.

US 5 387 969 A offenbart eine additive Fertigungseinrichtung mit einer Belichtungseinrichtung.

US 6 054 192 A offenbart eine additive Fertigungseinrichtung mit einer Belichtungseinrichtung.

US 2006/215246 A1 offenbart eine additive Fertigungseinrichtung mit einer Belichtungseinrichtung.

DE 10 2012 221 218 A1 offenbart eine Vorrichtung zur Qualitätssicherung von mittels Laserstrahlbearbeitung hergestellten Produkten.

DE 10 2015 012 565 B3 offenbart eine Vorrichtung und Verfahren zur Erhöhung der Genauigkeit eines OCT-Messsystems für die Lasermaterialbearbeitung.

Der Erfindung liegt die Aufgabe zugrunde, eine demgegenüber, insbesondere im Hinblick auf eine exakte Erfassung einer Positionierung der Strahlablenkeinrichtung, verbesserte Belichtungseinrichtung anzugeben.

Die Aufgabe wird durch eine Belichtungseinrichtung gemäß Anspruch 1 gelöst.

Die hierzu abhängigen Ansprüche betreffen mögliche Ausführungsformen der Belichtungseinrichtung.

Die hierin beschriebene Belichtungseinrichtung stellt eine Funktionskomponente einer Vorrichtung zur additiven Herstellung dreidimensionaler Objekte, d. h. insbesondere technischer Bauteile bzw. technischer Bauteilgruppen, dar. Eine entsprechende Vorrichtung wird im Weiteren auch als additive Vorrichtung bezeichnet. Wie sich im Weiteren ergibt, kann es sich bei einer solchen Vorrichtung um eine Vorrichtung zur Durchführung selektiver Lasersinterprozesse, d. h. um eine SLS-Vorrichtung, bzw. um eine Vorrichtung zur Durchführung selektiver Laserschmelzprozesse, d. h. um eine SLM-Vorrichtung, handeln.

Die Belichtungseinrichtung umfasst eine Energiestrahlerzeugungseinrichtung.

Die Energiestrahlerzeugungseinrichtung bzw. die dieser zugehörigen Komponenten kann bzw. können als gesonderte, gegebenenfalls modulartige, mit weiteren Baugruppen der Belichtungseinrichtung verbindbare Baugruppe vorliegen.

Die Energiestrahlerzeugungseinrichtung ist zur Erzeugung eines Energiestrahls, insbesondere eines Laserstrahls, eingerichtet, wofür die Energiestrahlerzeugungseinrichtung entsprechende Energie- bzw. Laserstrahlerzeugungselemente, etwa in Form von Lasergeneratoren, umfasst. Der Energiestrahl wird im Rahmen der Durchführung additiver Bauvorgänge zur selektiven Belichtung und damit einhergehenden selektiven Verfestigung einzelner Baumaterialschichten aus einem entsprechend verfestigbaren, typischerweise pulverförmigen, Baumaterial eingesetzt.

Die Belichtungseinrichtung umfasst weiter eine, wie erwähnt, typischerweise auch als Scannereinrichtung bezeichnete, Strahlablenkeinrichtung.

Auch die Strahlablenkeinrichtung bzw. die dieser zugehörigen Komponenten kann bzw. können als gesonderte, gegebenenfalls modulartige, mit weiteren Baugruppen der Belichtungseinrichtung verbindbare Baugruppe vorliegen. Die Strahlablenkeinrichtung ist zur Ablenkung eines von der Energiestrahlerzeugungseinrichtung erzeugten Energiestrahls auf einen bestimmten Einstrahlort in einer Bauebene einer additiven Vorrichtung eingerichtet, wofür die Strahlablenkeinrichtung geeignete, insbesondere in wenigstens einem Bewegungsfreiheitsgrad bewegbar gelagerte, Strahlablenkelemente, etwa in Form von Strahlablenkspielgeln, umfasst. Die Strahlablenkelemente sind typischerweise an oder in einem, typischerweise auch als Scankopf bezeichneten Bauelement der Strahlablenkeinrichtung angeordnet oder ausgebildet.

Die Strahlablenkeinrichtung bildet sonach einen Auskopplungspunkt zur Auskopplung (optischer) Strahlung aus der Belichtungseinrichtung. Wie sich im Weiteren ergibt, kann über die Strahlablenkeinrichtung jedoch auch, z. B. von der Bauebene, insbesondere von einem durch entsprechenden Energieeintrag in der Bauebene erzeugten Schmelzbereich, reflektierte Strahlung in die Belichtungseinrichtung eingekoppelt werden. Die Strahlablenkeinrichtung bildet sonach auch einen Einkopplungspunkt zur Einkopplung (optischer) Strahlung in die Belichtungseinrichtung.

Die Belichtungseinrichtung umfasst weiterhin einen Strahlengang. Die Energiestrahlerzeugungseinrichtung und die Strahlablenkeinrichtung sind in den Strahlengang geschaltet und über den Strahlengang optisch miteinander gekoppelt, sodass z. B. ein von der Energiestrahlerzeugungseinrichtung erzeugter Energiestrahl in die Strahlablenkeinrichtung einkoppelbar und über diese in an sich bekannter Weise auf einen bestimmten Einstrahlort innerhalb einer Bauebene einer additiven Vorrichtung auskoppelbar ist.

Die Belichtungseinrichtung zeichnet sich durch eine Positionserfassungseinrichtung und eine dieser zuordenbare bzw. zugeordnete Messstrahlerzeugungseinrichtung aus. Die Positionserfassungseinrichtung und die Messstrahlerzeugungseinrichtung können strukturell, d. h. z. B. in einer gemeinsamen Gehäusestruktur, zusammengefasst sein und können derart eine mit weiteren Baugruppen der Belichtungseinrichtung verbindbare gesonderte, gegebenenfalls modulartige, Baugruppe zur Erfassung der Position der Strahlablenkeinrichtung bilden.

Die Positionserfassungseinrichtung ist zur interferometrischen Erfassung der Position der Strahlablenkeinrichtung, insbesondere relativ zu einer Referenzposition, vermittels eines optischen Messstrahls ("Messstrahl") eingerichtet. Vermittels der Positionserfassungseinrichtung lässt sich die Position der Strahlablenkeinrichtung, insbesondere relativ zu einer Referenzposition, wie z. B. der Bauebene einer additiven Vorrichtung, exakt erfassen. Die Erfassung der Position der Strahlablenkeinrichtung, worunter selbstverständlich auch eine Ausrichtung der Strahlablenkeinrichtung, insbesondere relativ zu einer Referenzausrichtung, zu verstehen ist, erfolgt auf Grundlage der Prinzipien der der Absolutlaserinterferometrie, welche eine Erfassung einer Absolutposition ermöglicht. Die Positionserfassungseinrichtung und die Messstrahlerzeugungseinrichtung bilden insofern ein Absolutinterferometer, welches zur Erfassung einer Absolutposition der Strahlablenkeinrichtung eingerichtet ist.

Die Strahlablenkeinrichtung ist insbesondere eingerichtet, den Messstrahl auf wenigstens einen optischen Messpunkt ("Messpunkt"), insbesondere drei optische Messpunkte, insbesondere (jeweils) in Form eines den Messstrahl reflektierenden optischen Elements, bevorzugt eines Hohlspiegels, abzulenken.

Die Positionserfassungseinrichtung ist insbesondere eingerichtet, eine Position der Strahlablenkeinrichtung anhand des von dem wenigstens einen Messpunkt reflektierten Anteils des Messstrahls zu erfassen. Die Erfassung der Position der Strahlablenkeinrichtung erfolgt dabei z. B. über die Erfassung einer Laufzeit oder einer Phasenverschiebung des Messstrahls, d. h. insbesondere des von einem Messpunkt zurück reflektierten Anteils des Messstrahls. An dieser Stelle ist zu erwähnen, dass der Messstrahl - wie bei den genannten Prinzipien der Laserinterferometrie üblich - typischerweise wenigstens zwei unterschiedliche Wellenlängen umfassen kann. Weiterhin ist zu erwähnen, dass prinzipiell auch die Energiestrahlerzeugungseinrichtung als Messstrahlerzeugungseinrichtung dienen bzw. ausgebildet sein kann, sodass prinzipiell auch ein von der Energiestrahlerzeugungseinrichtung erzeugter Energiestrahl als Messstrahl dienen bzw. ausgebildet sein kann.

Selbstverständlich können in die Erfassung der Position der Strahlablenkeinrichtung diverse Betriebsparameter der Belichtungseinrichtung, insbesondere der Strahlablenkeinrichtung, wie z. B. Ausrichtungen, insbesondere Winkelstellungen, einzelner oder mehrerer Strahlablenkelemente (z. B. relativ zueinander und/oder relativ zu der Bauebene einer additiven Vorrichtung) einbezogen werden.

Die Messstrahlerzeugungseinrichtung ist zur Erzeugung des zur interferometrischen Erfassung der Position der Strahlablenkeinrichtung eingesetzten Messstrahls eingerichtet. Wesentlich ist dabei, dass der von der Messstrahlerzeugungseinrichtung erzeugte Messstrahl direkt in den Strahlengang der Belichtungseinrichtung einkoppelbar oder eingekoppelt ist. Die Positionserfassungseinrichtung bzw. die Messstrahlerzeugungseinrichtung ist sonach eingerichtet, den Messstrahl direkt in den Strahlengang der Belichtungseinrichtung einzukoppeln. Der Strahlengang der Belichtungseinrichtung wird also auch für den Messstrahl genutzt. Der Messstrahl durchläuft den Strahlengang von einem Messstrahlauskopplungspunkt der Messstrahlerzeugungseinrichtung bzw. der Positionserfassungseinrichtung und wird über die Strahlablenkeinrichtung über den Auskopplungspunkt der Belichtungseinrichtung aus der Belichtungseinrichtung ausgekoppelt. Wie erwähnt, ist die Strahlablenkeinrichtung insbesondere eingerichtet, den Messstrahl auf wenigstens einen Messpunkt, insbesondere drei Messpunkte, insbesondere in Form eines den Messstrahl reflektierenden optischen Elements, bevorzugt eines Hohlspiegels, abzulenken. Ein, z. B. von einem Messpunkt, reflektierter Anteil des Messstrahls wird über den Einkopplungspunkt der Belichtungseinrichtung in die Belichtungseinrichtung eingekoppelt und durchläuft den Strahlengang bis zu einem Messstrahleinkopplungspunkt der Messstrahlerzeugungseinrichtung bzw. der Positionserfassungseinrichtung.

Wenngleich es sich auch bei dem von der Messstrahlerzeugungseinrichtung erzeugbaren bzw. erzeugten Messstrahl auch um einen, gegebenenfalls von der Energiestrahlerzeugungseinrichtung erzeugten, Laserstrahl handeln kann, unterscheidet sich der Messstrahl von dem von der Energiestrahlerzeugungseinrichtung erzeugbaren bzw. erzeugten Energiestrahl typischerweise in wenigstens einem Strahlparameter, insbesondere der Energieintensität. Zudem erfolgt eine Auskopplung eines Energiestrahls typischerweise zeitlich versetzt zu einer Auskopplung eines Messstrahls; der Energiestrahl und der Messstrahl werden sonach typischerweise nicht gleichzeitig aus der Belichtungseinrichtung ausgekoppelt.

Die Belichtungseinrichtung kann eine (weitere) Erfassungseinrichtung umfassen bzw. kann der Belichtungseinrichtung eine (weitere) Erfassungseinrichtung zugeordnet sein. Die (weitere) Erfassungseinrichtung ist zur Erfassung eines, insbesondere in einem Schmelzbereich einer selektiv zu verfestigenden oder selektiv verfestigten Baumaterialschicht entstehenden, reflektierten Anteils des Energiestrahls eingerichtet. Der reflektierte Anteil des Energiestrahls ist über den Strahlengang optisch in die Erfassungseinrichtung einkoppelbar oder eingekoppelt. Die (weitere) Erfassungseinrichtung kann hard- und/oder softwaremäßig dazu eingerichtet sein, den erfassten reflektierten Anteil des Energiestrahls im Hinblick auf die Qualität, insbesondere die strukturellen Eigenschaften, des additiv herzustellenden bzw. hergestellten Objekts auszuwerten. Die (weitere) Erfassungseinrichtung umfasst hierzu geeignete Auswertealgorithmen. Hintergrund hierfür ist, dass der reflektierte Anteil des Energiestrahls von diversen, insbesondere geometrischen, Parametern des durch entsprechenden Energieeintrag erzeugten Schmelzbereichs abhängt, welcher sich maßgeblich auf die Bauteilqualität, d. h. insbesondere die strukturellen Eigenschaften, des additiv herzustellenden bzw. hergestellten Objekts auswirkt.

Sofern die Belichtungseinrichtung eine entsprechende Erfassungseinrichtung umfasst bzw. dieser eine solche zugeordnet ist, ist die Messstrahlerzeugungseinrichtung insbesondere eingerichtet, den Messstrahl in einen zwischen der Energiestrahlerzeugungseinrichtung und der (weiteren) Erfassungseinrichtung liegenden Abschnitt des Strahlengangs einzukoppeln. In diesem Fall ist die Messstrahlerzeugungseinrichtung zwischen der Energiestrahlerzeugungseinrichtung und der (weiteren) Erfassungseinrichtung angeordnet oder ausgebildet. Denkbar ist es jedoch, dass die Messstrahlerzeugungseinrichtung eingerichtet ist, den Messstrahl in einen der Erfassungseinrichtung vorgeschalteten Abschnitt des Strahlengangs einzukoppeln. In diesem Fall ist die Messstrahlerzeugungseinrichtung - zumindest bei Betrachtung der Auskopplungsrichtung des Energie- bzw. Messstrahls aus der Belichtungseinrichtung - der Erfassungseinrichtung vorgeschaltet angeordnet oder ausgebildet.

Durch das beschriebene Prinzip ist eine Direkterfassung der Position der Strahlablenkeinrichtung in einer Belichtungseinrichtung realisiert. Das beschriebene Prinzip ermöglicht eine exakte Erfassung der Position bzw. eine exakte Erfassung von Veränderungen der Position der Strahlablenkeinrichtung. Mithin ist eine, insbesondere im Hinblick auf eine exakte Erfassung einer Positionierung der Strahlablenkeinrichtung, verbesserte Belichtungseinrichtung gegeben.

Die Positionserfassungseinrichtung ist insbesondere eingerichtet, eine eine erfasste Position der Strahlablenkeinrichtung, insbesondere relativ zu einer Referenzposition, beschreibende Positionserfassungsinformation zu erzeugen. Eine entsprechende Positionserfassungsinformation kann datenmäßig von weiteren Funktionskomponenten einer additiven Vorrichtung, insbesondere im Zusammenhang mit der Kompensation bzw. Korrektur von (erfassten) Positionsänderungen der Strahlablenkeinrichtung verwendet werden. Beispielsweise kann eine Steuereinrichtung der additiven Vorrichtung, welche zur Steuerung der vermittels der Belichtungseinrichtung durchzuführenden oder durchgeführten selektiven Belichtung einer Baumaterialschicht auf Grundlage von die selektive Belichtung einer jeweiligen Baumaterialschicht beschreibenden Belichtungsinformationen, eingerichtet ist, eingerichtet sein, entsprechende Belichtungsinformationen in Abhängigkeit einer vermittels der Positionserfassungseinrichtung erzeugten Positionserfassungsinformation zu variieren, d. h. insbesondere an eine erfasste Änderung der Position der Strahlablenkeinrichtung, insbesondere relativ zu einer Referenzposition, anzupassen.

Wie mehrfach erwähnt, ist die Strahlablenkeinrichtung typischerweise eingerichtet, den Messstrahl auf wenigstens einen Messpunkt, insbesondere drei Messpunkte, insbesondere in Form eines den Messstrahl reflektierenden optischen Elements, bevorzugt eines Hohlspiegels, abzulenken, und die Positionserfassungseinrichtung eingerichtet, eine Position der Strahlablenkeinrichtung anhand des von dem Messpunkt reflektierten Messstrahls zu erfassen. Insbesondere kann der Belichtungseinrichtung eine mehrere Messpunkte umfassende optische Messpunktanordnung ("Messpunktanordnung") zuordenbar oder zugeordnet sein. Die Messpunktanordnung kann einen (funktionellen) Bestandteil der Positionserfassungseinrichtung darstellen. Die der Messpunktanordnung zugehörigen Messpunkte sind in einer definierten räumlichen Anordnung (relativ) zueinander angeordnet oder ausgebildet. Die Messpunkte können grundsätzlich beliebige räumliche Positionen einnehmen. Die Messpunkte können in einer gemeinsamen Ebene oder gegebenenfalls auch in unterschiedlichen räumlichen Ebenen angeordnet oder ausgebildet sein, solange sie in einer definierten räumlichen Anordnung (relativ) zueinander angeordnet oder ausgebildet sind. Jeder Messpunkt kann zur Erfassung einer bestimmten Positionsinformation der Strahlablenkeinrichtung dienen. Mithin können die von jeweiligen Messpunkten reflektierten Messstrahlen jeweils zur Erfassung einer bestimmten Positionsinformation der Strahlablenkeinrichtung verwendet werden. Aus den einzelnen Positionsinformationen kann vermittels der Positionserfassungseinrichtung eine durch eine entsprechende Positionserfassungsinformation beschriebene Absolutposition der Strahlablenkeinrichtung erzeugt werden.

Alternativ zu der Anordnung oder Ausbildung jeweiliger Messpunkte in unterschiedlichen Ebenen, ist es selbstverständlich auch möglich, dass die Messpunkte einer Messpunktanordnung in einer gemeinsamen Ebene angeordnet oder ausgebildet sind. Bei der Ebene kann es sich z. B. um die Bauebene einer additiven Vorrichtung handeln. Die Messpunkte können daher also z. B. insbesondere innerhalb der Bauebene, im Allgemeinen innerhalb einer Ebene innerhalb der Prozesskammer, einer additiven Vorrichtung angeordnet oder ausgebildet sein. Die Messpunkte können äquidistant verteilt in der Ebene angeordnet oder ausgebildet sein.

Die Erfindung betrifft ferner eine Vorrichtung ("additive Vorrichtung") zur additiven Herstellung dreidimensionaler Objekte, d. h. beispielsweise technischer Bauteile bzw. technischer Bauteilgruppen durch sukzessives schichtweises selektives Belichten und damit einhergehendes Verfestigen von Baumaterialschichten aus einem verfestigbaren Baumaterial vermittels eines Energiestrahls. Vermittels der Vorrichtung durchgeführte additive Bauvorgänge erfolgen in einer der Vorrichtung zugehörigen, typischerweise inertisierbaren, Prozesskammer. Die Prozesskammer kann einen Teil einer Gehäusestruktur der Vorrichtung bilden. Bei der additiven Vorrichtung kann es sich um eine SLM-Vorrichtung, d. h. um eine Vorrichtung zur Durchführung selektiver Laserschmelzverfahren (SLM-Verfahren) oder um eine SLS-Vorrichtung, d. h. um eine Vorrichtung zur Durchführung selektiver Lasersinterverfahren (SLS-Verfahren), handeln. Die selektive Verfestigung jeweiliger selektiv zu verfestigender Baumaterialschichten erfolgt auf Grundlage objektbezogener Baudaten. Entsprechende Baudaten beschreiben die geometrisch-konstruktive Gestalt des jeweils additiv herzustellenden Objekts und können beispielsweise "geslicte" CAD-Daten eines jeweiligen additiv herzustellenden Objekts beinhalten.

Die additive Vorrichtung umfasst die zur Durchführung additiver Bauvorgänge typischerweise erforderlichen Funktionskomponenten, d. h. insbesondere eine Belichtungseinrichtung zur sukzessiven schichtweisen selektiven Belichtung und damit einhergehenden Verfestigung von Baumaterialschichten aus einem verfestigbaren Baumaterial, d. h. insbesondere einem partikulären bzw. pulverförmigen Metall-, Kunststoff- und/oder Keramikmaterial, und eine Beschichtereinrichtung zur Ausbildung zu verfestigender Baumaterialschichten in einer Bauebene. Bei einer Bauebene kann es sich um eine Oberfläche eines, typischerweise (in vertikaler Richtung) bewegbar gelagerten, Trägerelements einer Trägereinrichtung oder um eine Baumaterialschicht handeln. Im Allgemeinen ist in einer Bauebene wenigstens eine selektiv zu verfestigende bzw. selektiv verfestigte Baumaterialschicht angeordnet oder ausgebildet. Die Vorrichtung zeichnet sich dadurch aus, dass sie wenigstens eine wie beschriebene Belichtungseinrichtung umfasst. Sämtliche Ausführungen im Zusammenhang mit der hierin beschriebenen Belichtungseinrichtung gelten sonach analog für die additive Vorrichtung.

Die additive Vorrichtung kann eine Steuereinrichtung zur Steuerung der vermittels der Belichtungseinrichtung durchzuführenden oder durchgeführten Belichtung jeweiliger Baumaterialschichten auf Grundlage von die selektive Belichtung einer jeweiligen Baumaterialschicht beschreibenden Belichtungsinformationen umfassen. Die Steuereinrichtung ist eingerichtet, die Belichtungsinformationen in Abhängigkeit einer vermittels der Positionserfassungseinrichtung erzeugten Positionserfassungsinformation zu variieren, d. h. insbesondere an eine erfasste Änderung der Position der Strahlablenkeinrichtung, insbesondere relativ zu einer Referenzposition, anzupassen. Eine entsprechende Positionserfassungsinformation kann, wie erwähnt, sonach datenmäßig von weiteren Funktionskomponenten einer additiven Vorrichtung, d. h. insbesondere einer entsprechenden Steuereinrichtung zur Kompensation bzw. Korrektur von (erfassten) Positionsänderungen der Strahlablenkeinrichtung verwendet werden. Dies kann konkret z. B. derart umgesetzt sein, dass bei einer erfassten Positionsänderung der Strahlablenkeinrichtung in einer bestimmten Raumrichtung um einen bestimmten Betrag, d. h. z. B. 0,2 mm, eine entsprechende Anpassung der Belichtung erfolgt, sodass der Energiestrahl in der entsprechenden Raumrichtung um den entsprechenden Betrag versetzt auf die Baumaterialschicht gelenkt wird. Schließlich ist anzumerken, dass die Strahlablenkeinrichtung auch eingerichtet sein kann, den optischen Messstrahl auf eine selektiv zu verfestigende Baumaterialschicht zu lenken, und die Positionserfassungseinrichtung, insbesondere in Funktion einer Schichtdickenerfassungseinrichtung, eingerichtet sein kann, die Schichtdicke der Baumaterialschicht anhand des von der Baumaterialschicht reflektierten Anteils des optischen Messstrahls (direkt) zu erfassen. Derart kann auf einfache Weise zusätzlich eine Schichtdickenerfassungseinrichtung implementiert sein.

Die Erfindung betrifft ferner ein Verfahren zur interferometrischen Erfassung der Position der Strahlablenkeinrichtung, insbesondere relativ zu einer Referenzposition, einer einen Strahlengang umfassenden Belichtungseinrichtung, insbesondere einer wie beschriebenen Belichtungseinrichtung, einer additiven Vorrichtung vermittels eines optischen Messstrahls. Das Verfahren zeichnet sich durch die folgenden Schritte aus: Erzeugen eines optischen Messstrahls, interferometrisches Erfassen der Position der Strahlablenkeinrichtung, insbesondere relativ zu einer Referenzposition, vermittels des optischen Messstrahls, insbesondere vermittels eines von einem Messpunkt reflektierten Anteils des optischen Messstrahls. Verfahrensgemäß wird der optische Messstrahl direkt in den Strahlengang der Belichtungseinrichtung eingekoppelt. Sämtliche Ausführungen im Zusammenhang mit der hierin beschriebenen Belichtungseinrichtung gelten sonach auch analog für das Verfahren. Umgekehrt gelten sämtliche Ausführungen im Zusammenhang mit dem Verfahren analog für die Belichtungseinrichtung und die additive Vorrichtung.

Verfahrensgemäß durchläuft der Messstrahl also den Strahlengang der Belichtungseinrichtung, insbesondere einer einer der Belichtungseinrichtung zugehörigen Messstrahlerzeugungseinrichtung bzw. Positionserfassungseinrichtung, und wird über die Strahlablenkeinrichtung über einen Auskopplungspunkt der Belichtungseinrichtung aus der Belichtungseinrichtung ausgekoppelt. Die Strahlablenkeinrichtung lenkt den Messstrahl auf wenigstens einen Messpunkt, insbesondere in Form eines den Messstrahl reflektierenden optischen Elements, bevorzugt eines Hohlspiegels. Der von einem Messpunkt reflektierte Anteil des Messstrahls wird über einen Einkopplungspunkt der Belichtungseinrichtung (wieder) in die Belichtungseinrichtung eingekoppelt und durchläuft den Strahlengang bis zu einer Positionserfassungseinrichtung. Die Positionserfassungseinrichtung erfasst die Position der Strahlablenkeinrichtung auf Basis des reflektierten Anteils des Messstrahls, d. h. z. B. über dessen Laufzeit oder Phasenverschiebung. Die Auskopplung des Messstrahls erfolgt typischerweise zeitlich versetzt zu einer Auskopplung eines Energiestrahls; Energiestrahl und Messstrahl werden sonach typischerweise nicht gleichzeitig ausgekoppelt. Mithin erfolgen Belichtungs- und Positionserfassungsvorgänge typischerweise abwechselnd; insbesondere kann ein Positionserfassungsvorgang nach einem Belichtungsvorgang einer (ersten) Baumaterialschicht bzw. vor einem Belichtungsvorgang einer im Folgenden zu belichtenden weiteren Baumaterialschicht erfolgen.

Die Erfindung ist anhand von Ausführungsbeispielen in den Zeichnungsfiguren näher erläutert. Dabei zeigen:
- Fig. 1: eine Prinzipdarstellung einer Belichtungseinrichtung gemäß einem Ausführungsbeispiel; und
- Fig. 2: eine Prinzipdarstellung einer Vorrichtung gemäß einem Ausführungsbeispiel.

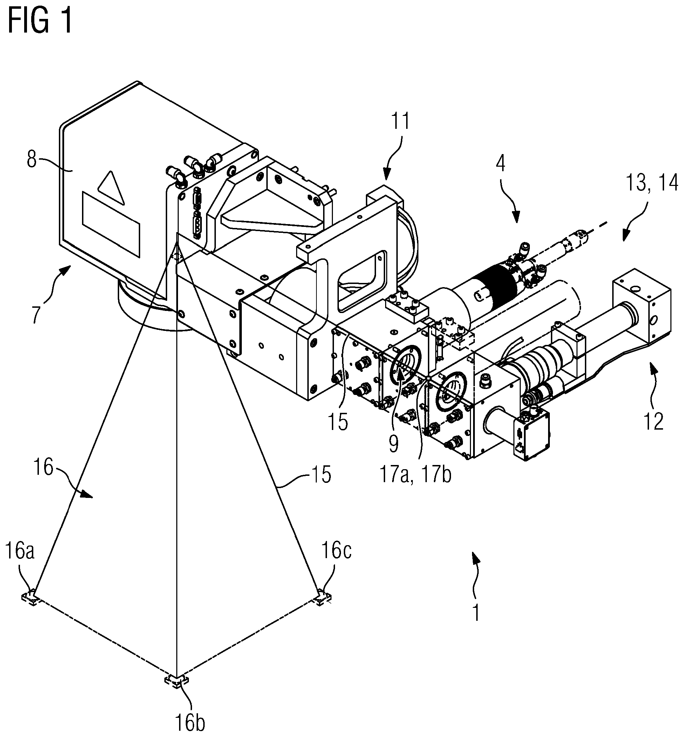

Fig. 1 zeigt eine Prinzipdarstellung einer Belichtungseinrichtung 1 gemäß einem Ausführungsbeispiel. Die Belichtungseinrichtung 1 ist in Fig. 1 in einer perspektivischen Ansicht gezeigt.

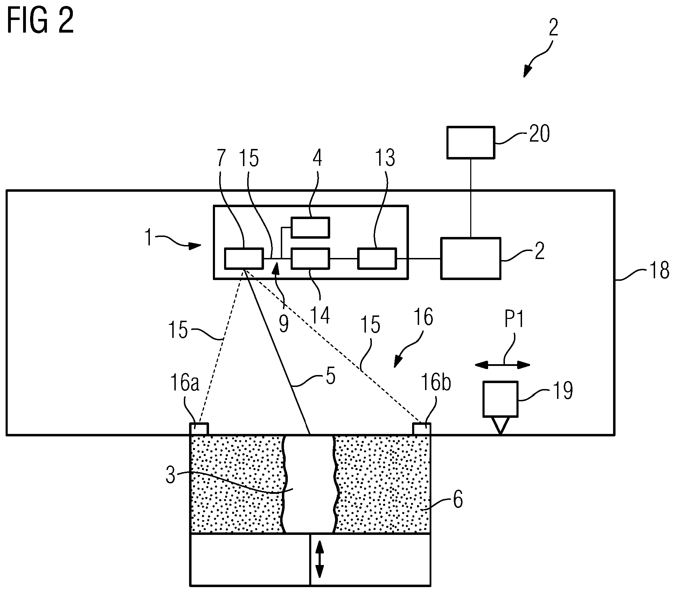

Die Belichtungseinrichtung 1 stellt eine Funktionskomponente einer Vorrichtung 2 zur additiven Herstellung dreidimensionaler Objekte 3, d. h. insbesondere technischer Bauteile bzw. technischer Bauteilgruppen, dar. Bei einer entsprechenden Vorrichtung 2 kann es sich um eine Vorrichtung zur Durchführung selektiver Lasersinterprozesse, d. h. um eine SLS-Vorrichtung, bzw. um eine Vorrichtung zur Durchführung selektiver Laserschmelzprozesse, d. h. um eine SLM-Vorrichtung, handeln. Ein Ausführungsbeispiel einer entsprechenden Vorrichtung 2in Form einer SLM-Vorrichtung ist in Fig. 2 gezeigt.

Die Belichtungseinrichtung 1 umfasst eine Energiestrahlerzeugungseinrichtung 4. Die Energiestrahlerzeugungseinrichtung 4 bzw. die dieser zugehörigen Komponenten kann bzw. können als gesonderte, gegebenenfalls modulartige, mit weiteren Baugruppen der Belichtungseinrichtung 1 verbindbare Baugruppe (nicht näher bezeichnet) vorliegen Die Energiestrahlerzeugungseinrichtung 4 ist zur Erzeugung eines Energiestrahls 5, insbesondere eines Laserstrahls, eingerichtet. Hierfür umfasst die Energiestrahlerzeugungseinrichtung 4 entsprechende Energie- bzw. Laserstrahlerzeugungselemente (nicht gezeigt), etwa in Form von Lasergeneratoren. Der Energiestrahl 5 wird im Rahmen der Durchführung additiver Bauvorgänge zur selektiven Belichtung und damit einhergehenden selektiven Verfestigung einzelner Baumaterialschichten aus einem entsprechend verfestigbaren, typischerweise pulverförmigen, Baumaterial 6 eingesetzt (vgl. Fig. 2).

Die Belichtungseinrichtung 1 umfasst weiter eine auch als Scannereinrichtung zu bezeichnende Strahlablenkeinrichtung 7. Auch die Strahlablenkeinrichtung 7 bzw. die dieser zugehörigen Komponenten kann bzw. können als gesonderte, gegebenenfalls modulartige, mit weiteren Baugruppen der Belichtungseinrichtung 1 verbindbare Baugruppe vorliegen. Die Strahlablenkeinrichtung 7 ist zur Ablenkung eines von der Energiestrahlerzeugungseinrichtung 4 erzeugten Energiestrahls 5 auf einen bestimmten Einstrahlort in einer Bauebene einer additiven Vorrichtung eingerichtet. Hierfür umfasst die Strahlablenkeinrichtung 7 geeignete, insbesondere in wenigstens einem Bewegungsfreiheitsgrad bewegbar gelagerte, Strahlablenkelemente (nicht näher bezeichnet), etwa in Form von Strahlablenkspieleln. Die Strahlablenkelemente sind typischerweise an oder in einem, typischerweise auch als Scankopf bezeichneten Bauelement 8 der Strahlablenkeinrichtung 7 angeordnet oder ausgebildet.

Die Strahlablenkeinrichtung 7 bildet einen Auskopplungspunkt zur Auskopplung (optischer) Strahlung aus der Belichtungseinrichtung 1. Über die Strahlablenkeinrichtung 7 kann jedoch auch, z. B. von der Bauebene, insbesondere von einem durch entsprechenden Energieeintrag in der Bauebene erzeugten Schmelzbereich, reflektierte Strahlung in die Belichtungseinrichtung 1 eingekoppelt werden. Die Strahlablenkeinrichtung 7 bildet sonach auch einen Einkopplungspunkt zur Einkopplung (optischer) Strahlung in die Belichtungseinrichtung 1.

Die Belichtungseinrichtung 1 umfasst weiterhin einen (optischen) Strahlengang 9. Ersichtlich sind die Energiestrahlerzeugungseinrichtung 4 und die Strahlablenkeinrichtung 7 in den Strahlengang 9 geschaltet und über den Strahlengang 9 optisch miteinander gekoppelt, sodass z. B. ein von der Energiestrahlerzeugungseinrichtung 7 erzeugter Energiestrahl 5 in die Strahlablenkeinrichtung 7 einkoppelbar und über diese auf einen bestimmten Einstrahlort innerhalb einer Bauebene einer additiven Vorrichtung auskoppelbar ist.

In dem in Fig. 1 gezeigten Ausführungsbeispiel sind in den Strahlengang 9 der Belichtungseinrichtung 1 weitere optionale Funktionskomponenten der Belichtungseinrichtung 1 geschaltet. Hierzu zählt eine Fokussiereinrichtung 11 sowie eine Erfassungseinrichtung 12. Die Fokussiereinrichtung 11 ist zur Einstellung des Fokus des Energiestrahls 5 eingerichtet und umfasst hierzu mehrere, insbesondere relativ zueinander bewegbar gelagerte, optische Fokussierelemente (nicht gezeigt), insbesondere Linsenelemente. Die Erfassungseinrichtung 12 ist zur Erfassung eines, insbesondere in einem Schmelzbereich einer selektiv zu verfestigenden oder selektiv verfestigten Baumaterialschicht entstehenden, reflektierten Anteils des Energiestrahls 5 eingerichtet. Der reflektierte Anteil des Energiestrahls 5 ist über den Strahlengang 9 optisch in die Erfassungseinrichtung einkoppelbar. Die Erfassungseinrichtung 12 ist hard- und/oder softwaremäßig dazu eingerichtet, den erfassten reflektierten Anteil des Energiestrahls 5 im Hinblick auf die Qualität, d. h. insbesondere die strukturellen Eigenschaften, des additiv herzustellenden bzw. hergestellten Objekts 3 auszuwerten und umfasst hierzu geeignete Auswertealgorithmen.

Die Belichtungseinrichtung 1 umfasst weiterhin eine Positionserfassungseinrichtung 13 und eine dieser zugeordnete Messstrahlerzeugungseinrichtung 14. In dem gezeigten Ausführungsbeispiel sind die Positionserfassungseinrichtung 13 und die Messstrahlerzeugungseinrichtung 14 strukturell in einer gemeinsamen Gehäusestruktur (nicht bezeichnet) zusammengefasst und bilden derart eine mit weiteren Baugruppen der Belichtungseinrichtung 1 verbindbare gesonderte, gegebenenfalls modulartige, Baugruppe.

Die Positionserfassungseinrichtung 13 ist zur interferometrischen Erfassung der Position der Strahlablenkeinrichtung 7, insbesondere relativ zu einer Referenzposition, vermittels eines optischen Messstrahls 15 eingerichtet. Vermittels der Positionserfassungseinrichtung 13 lässt sich die Position der Strahlablenkeinrichtung 7, insbesondere relativ zu einer Referenzposition, wie z. B. der Bauebene einer additiven Vorrichtung 2, exakt erfassen. Die Erfassung der Position der Strahlablenkeinrichtung 7, worunter auch eine Ausrichtung der Strahlablenkeinrichtung 7, insbesondere relativ zu einer Referenzausrichtung, zu verstehen ist, erfolgt auf Grundlage der Prinzipien der Absolutlaserinterferometrie. Die Strahlablenkeinrichtung 7 ist hierfür eingerichtet, den Messstrahl 15 auf einen optischen Messpunkt 16a - 16c in Form eines den Messstrahl 15 reflektierenden optischen Elements, bevorzugt eines Hohlspiegels, abzulenken. Die Positionserfassungseinrichtung 13 ist eingerichtet, eine Position der Strahlablenkeinrichtung 7 anhand des von dem oder den Messpunkt(en) 16a - 16c reflektierten Anteils des Messstrahls 15 zu erfassen. Die Erfassung der Position der Strahlablenkeinrichtung 7 erfolgt dabei über die Erfassung der Laufzeit oder der Phasenverschiebung des Messstrahls 15, d. h. insbesondere des von einem Messpunkt 16a - 16c zurück reflektierten Anteils des Messstrahls 15. Der Messstrahl 15 umfasst typischerweise wenigstens zwei unterschiedliche Wellenlängen.

In die Erfassung der Position der Strahlablenkeinrichtung 7 können selbstverständlich diverse Betriebsparameter der Belichtungseinrichtung 1, insbesondere der Strahlablenkeinrichtung 7, wie z. B. Ausrichtungen, insbesondere Winkelstellungen, einzelner oder mehrerer Strahlablenkelemente (z. B. relativ zueinander und/oder relativ zu der Bauebene) einbezogen werden.

Die Messstrahlerzeugungseinrichtung 14 ist zur Erzeugung des Messstrahls 15 eingerichtet. Die Positionserfassungseinrichtung 13 und die Messstrahlerzeugungseinrichtung 14 bilden ein Absolutinterferometer . Wesentlich ist, dass die Messstrahlerzeugungseinrichtung 14 eingerichtet ist, den Messstrahl 15 direkt in den Strahlengang 9 der Belichtungseinrichtung 1 einzukoppeln, d. h. der Messstrahl 15 ist direkt in den Strahlengang 9 der Belichtungseinrichtung 1 einkoppelbar oder eingekoppelt. Die Messstrahlerzeugungseinrichtung 14 ist sonach eingerichtet, den Messstrahl 15 direkt in den Strahlengang 9 der Belichtungseinrichtung 1 einzukoppeln. Der Messstrahl 15 durchläuft den Strahlengang 9 von einem Messstrahlauskopplungspunkt 17b der Messstrahlerzeugungseinrichtung 14, wird gegebenenfalls über optische Ablenkelemente (nicht gezeigt), wie Spiegelelemente, abgelenkt, und über die Strahlablenkeinrichtung 7 über den Auskopplungspunkt der Belichtungseinrichtung 1 aus der Belichtungseinrichtung 1 ausgekoppelt. Ein von einem Messpunkt 16a - 16c reflektierter Anteil des Messstrahls 15 wird über den Einkopplungspunkt der Belichtungseinrichtung 1 in die Belichtungseinrichtung 1 eingekoppelt und durchläuft den Strahlengang 9 bis zu einem Messstrahleinkopplungspunkt 17a der Positionserfassungseinrichtung 13. Ersichtlich können der Messstrahleinkopplungspunkt 17a und der Messstrahlauskopplungspunkt 17b zusammen fallen.

In dem gezeigten Ausführungsbeispiel ist die Messstrahlerzeugungseinrichtung 14 eingerichtet, den Messstrahl 15 in einen zwischen der Energiestrahlerzeugungseinrichtung 4 und der Erfassungseinrichtung 12 liegenden Abschnitt des Strahlengangs 9 einzukoppeln und ist entsprechend zwischen der Energiestrahlerzeugungseinrichtung 4 und der Erfassungseinrichtung 12 angeordnet oder ausgebildet. Denkbar wäre es jedoch auch, den Messstrahl 15 in einen der Erfassungseinrichtung 12 vorgeschalteten Abschnitt des Strahlengangs 9 einzukoppeln. In diesem Fall wäre die Messstrahlerzeugungseinrichtung 14 - zumindest bei Betrachtung der Auskopplungsrichtung des Energie- bzw. Messstrahls 15 aus der Belichtungseinrichtung 1 - der Erfassungseinrichtung 12 vorgeschaltet angeordnet.

Bei dem Messstrahl 15 kann es sich ebenso wie bei dem Energiestrahl 5 um einen Laserstrahl handeln. Der Messstrahl 15 unterscheidet sich von dem von Energiestrahl 5 jedoch typischerweise in wenigstens einem Strahlparameter, insbesondere der Energieintensität. Zudem erfolgt eine Auskopplung des Energiestrahls 5 typischerweise zeitlich versetzt zu einer Auskopplung des Messstrahls 15; der Energiestrahl 5 und der Messstrahl 15 werden sonach typischerweise nicht gleichzeitig aus der Belichtungseinrichtung 1 ausgekoppelt.

Die Positionserfassungseinrichtung 13 ist eingerichtet, eine eine erfasste Position der Strahlablenkeinrichtung 7, insbesondere relativ zu einer Referenzposition, beschreibende Positionserfassungsinformation zu erzeugen. Eine entsprechende Positionserfassungsinformation kann, wie weiter unten im Zusammenhang mit der Beschreibung des Ausführungsbeispiels gemäß Fig. 2 erläutert, datenmäßig von weiteren Funktionskomponenten einer additiven Vorrichtung 2, insbesondere im Zusammenhang mit der Kompensation bzw. Korrektur von (erfassten) Positionsänderungen der Strahlablenkeinrichtung verwendet werden.

Anhand von Fig. 1 ist ersichtlich, dass der Belichtungseinrichtung 1 eine mehrere Messpunkte 16a - 16c umfassende optische Messpunktanordnung 16 zugeordnet ist. Die Messpunktanordnung 16 stellt einen (funktionellen) Bestandteil der Positionserfassungseinrichtung 13 dar. Die der Messpunktanordnung 16 zugehörigen Messpunkte 16a - 16c sind in einer definierten räumlichen Anordnung (relativ) zueinander angeordnet. In dem in Fig. 1 gezeigten Ausführungsbeispiel sind die Messpunkte 16a - 16c in einer gemeinsamen Ebene, bei welches es sich um die Bauebene einer additiven Vorrichtung handeln kann, angeordnet. Jeder Messpunkt 16a - 16c kann zur Erfassung einer bestimmten Positionsinformation der Strahlablenkeinrichtung 7 dienen. Mithin können die von jeweiligen Messpunkten 16a - 16c reflektierten Messstrahlen 15 bzw. Messstrahlanteile jeweils zur Erfassung einer bestimmten Positionsinformation der Strahlablenkeinrichtung 7 verwendet werden. Aus den einzelnen Positionsinformationen kann die Positionserfassungseinrichtung 13 eine durch eine entsprechende Positionserfassungsinformation beschriebene Absolutposition der Strahlablenkeinrichtung 7 erzeugen.

Fig. 2 zeigt eine Prinzipdarstellung einer Vorrichtung 2 gemäß einem Ausführungsbeispiel. Die Vorrichtung 2 ist in Fig. 2 in einer rein schematischen Ansicht dargestellt.

Die Vorrichtung 2 dient der additiven Herstellung dreidimensionaler Objekte 3, d. h. beispielsweise technischer Bauteile bzw. technischer Bauteilgruppen, durch sukzessives schichtweises selektives Belichten und damit einhergehendes Verfestigen von Baumaterialschichten aus einem verfestigbaren Baumaterial 6 vermittels eines von einer Energiestrahlerzeugungseinrichtung 4 erzeugten Energiestrahls 5. Bei der Vorrichtung 2 handelt es sich um eine SLM-Vorrichtung, d. h. um eine Vorrichtung zur Durchführung selektiver Laserschmelzverfahren (SLM-Verfahren). Bei dem Energiestrahl 5 handelt es sich demnach um einen Laserstrahl und bei dem Baumaterial 6 insbesondere um ein partikuläres bzw. pulverförmiges Metall, wie z. B. Aluminium, Edelstahl oder Titan. Die selektive Verfestigung jeweiliger zu verfestigender Baumaterialschichten erfolgt auf Grundlage von objektbezogenen Baudaten. Entsprechende Baudaten beschreiben die geometrische bzw. geometrisch-konstruktive Gestalt des jeweils additiv herzustellenden Objekts 3. Entsprechende Baudaten können beispielsweise "geslicte" CAD-Daten des herzustellenden Objekts 3 beinhalten.

Die Vorrichtung 2 umfasst eine inertisierbare Prozesskammer 18. Die Prozesskammer 18 kann einen Teil einer Gehäusestruktur (nicht näher bezeichnet) der Vorrichtung 2 bilden. In der Prozesskammer 18 sind die zur Durchführung additiver Bauvorgänge erforderlichen Funktionskomponenten, d. h. insbesondere die Belichtungseinrichtung 1 und eine, wie durch den horizontal ausgerichteten Doppelpfeil P1 angedeutet, bewegbar gelagerte Beschichtereinrichtung 19 zur Ausbildung zu verfestigender Baumaterialschichten in einer Bauebene angeordnet bzw. ausgebildet.

Die Vorrichtung 2 weist eine wie im Zusammenhang mit dem in Fig. 1 gezeigten Ausführungsbeispiel beschriebene Belichtungseinrichtung 1 auf. Die Belichtungseinrichtung 1 ist ohne die Fokussiereinrichtung 11 und ohne die Erfassungseinrichtung 12 dargestellt, um zu verdeutlichen, dass es sich hierbei grundsätzlich um optionale Funktionskomponenten der Belichtungseinrichtung 1 handelt. Der vermittels der Energiestrahlerzeugungseinrichtung 4 erzeugte Energiestrahl 5 ist durchgezogen, der vermittels der Messstrahlerzeugungseinrichtung 14 erzeugte Messstrahl 15 ist strichliert dargestellt. Wie erwähnt, erfolgt eine Auskopplung des Energiestrahls 5 typischerweise zeitlich versetzt zu einer Auskopplung des Messstrahls 15; der Energiestrahl 5 und der Messstrahl 15 werden sonach typischerweise nicht gleichzeitig aus der Belichtungseinrichtung 1 ausgekoppelt.

Die Vorrichtung 2 umfasst eine hard- und/oder softwaremäßig implementierte Steuereinrichtung 20. Die Steuereinrichtung 20 ist zur Steuerung der vermittels der Belichtungseinrichtung 1 durchzuführenden bzw. durchgeführten Belichtung jeweiliger Baumaterialschichten auf Grundlage von die selektive Belichtung einer jeweiligen Baumaterialschicht beschreibenden Belichtungsinformationen eingerichtet. Die Steuereinrichtung 20 ist eingerichtet, die Belichtungsinformationen in Abhängigkeit einer vermittels der Positionserfassungseinrichtung 13 erzeugten Positionserfassungsinformation zu variieren, d. h. insbesondere an eine erfasste Änderung der Position der Strahlablenkeinrichtung 7, insbesondere relativ zu einer Referenzposition, anzupassen. Eine entsprechende Positionserfassungsinformation kann sonach datenmäßig von weiteren Funktionskomponenten einer additiven Vorrichtung 2, d. h. insbesondere der Steuereinrichtung 20 zur Kompensation bzw. Korrektur von (erfassten) Positionsänderungen der Strahlablenkeinrichtung 7 verwendet werden. Dies kann konkret z. B. derart umgesetzt sein, dass bei einer erfassten Positionsänderung der Strahlablenkeinrichtung 7 in einer bestimmten Raumrichtung um einen bestimmten Betrag, d. h. z. B. 0,2 mm, eine entsprechende Anpassung der Belichtung erfolgt, sodass der Energiestrahl 5 in der entsprechenden Raumrichtung um den entsprechenden Betrag versetzt auf die selektiv zu verfestigende Baumaterialschicht gelenkt wird.

Die Strahlablenkeinrichtung 7 kann eingerichtet sein, den optischen Messstrahl 15 auf eine selektiv zu verfestigende Baumaterialschicht zu lenken. Die Positionserfassungseinrichtung 13 kann, insbesondere in Funktion einer Schichtdickenerfassungseinrichtung, eingerichtet sein, die Schichtdicke der Baumaterialschicht anhand des von der Baumaterialschicht reflektierten Anteils des optischen Messstrahls 15 (direkt) zu erfassen.

Mit der Belichtungseinrichtung 1 bzw. der Vorrichtung 2 lässt sich ein Verfahren zur interferometrischen Erfassung der Position der Strahlablenkeinrichtung 7, insbesondere relativ zu einer Referenzposition, einer entsprechenden Belichtungseinrichtung 1 vermittels eines Messstrahl 15 implementieren. Das Verfahren zeichnet sich durch die folgenden Schritte aus: Erzeugen eines optischen Messstrahls 15, (absolut)interferometrisches Erfassen der Position der Strahlablenkeinrichtung 7, insbesondere relativ zu einer Referenzposition, vermittels des optischen Messstrahls 15, insbesondere vermittels eines von einem Messpunkt 16a - 16c reflektierten Anteils des optischen Messstrahls 15. Verfahrensgemäß wird der optische Messstrahl 15 direkt in den Strahlengang 9 der Belichtungseinrichtung 1 eingekoppelt.

## Patentansprüche

1. Belichtungseinrichtung (1) für eine Vorrichtung (2) zur additiven Herstellung dreidimensionaler Objekte (3) durch sukzessives schichtweises selektives Belichten und damit einhergehendes Verfestigen von Baumaterialschichten aus einem verfestigbaren Baumaterial (6) vermittels eines Energiestrahls (5), wobei die Belichtungseinrichtung (1) eine Energiestrahlerzeugungseinrichtung (4), welche zur Erzeugung eines Energiestrahls (5) eingerichtet ist, eine Strahlablenkeinrichtung (7), welche zur Ablenkung eines von der Energiestrahlerzeugungseinrichtung (4) erzeugten Energiestrahls (5) auf einen bestimmten Einstrahlort eingerichtet ist, sowie einen durch wenigstens ein optisch leitfähiges Element gebildeten oder wenigstens ein solches umfassenden Strahlengang (9), umfasst, aufweisend
eine Positionserfassungseinrichtung (13), welche zur interferometrischen Erfassung der Position der Strahlablenkeinrichtung (7), insbesondere relativ zu einer Referenzposition, vermittels eines optischen Messstrahls (15) eingerichtet ist, sowie
eine der Positionserfassungseinrichtung (13) zugeordnete Messstrahlerzeugungseinrichtung (14), welche zur Erzeugung des zur optischen Erfassung der Position der Strahlablenkeinrichtung (7) eingesetzten optischen Messstrahls (15) eingerichtet ist, wobei der von der Messstrahlerzeugungseinrichtung (14) erzeugte optische Messstrahl (15) direkt in den Strahlengang (9) der Belichtungseinrichtung (1) einkoppelbar oder eingekoppelt ist, wobei die Positionserfassungseinrichtung (13) und die Messstrahlerzeugungseinrichtung (14) ein Absolutinterferometer bilden.

2. Belichtungseinrichtung nach Anspruch 1, **dadurch gekennzeichnet, dass** die Energiestrahlerzeugungseinrichtung (4) und die Strahlablenkeinrichtung (7) über den Strahlengang (9) optisch miteinander gekoppelt sind,

3. Belichtungseinrichtung nach einem der vorhergehenden Ansprüche, **dadurch gekennzeichnet, dass** die Positionserfassungseinrichtung (13) eingerichtet ist, eine eine erfasste Position der Strahlablenkeinrichtung (7), insbesondere relativ zu einer Referenzposition, beschreibende Positionserfassungsinformation zu erzeugen.

4. Belichtungseinrichtung nach einem der vorhergehenden Ansprüche, **dadurch gekennzeichnet, dass** die Strahlablenkeinrichtung (7) eingerichtet ist, den optischen Messstrahl (15) auf wenigstens einen optischen Messpunkt (16a - 16c), insbesondere drei optische Messpunkte (16a - 16c), insbesondere in Form eines den optischen Messstrahl (15) reflektierenden optischen Elements, bevorzugt eines Hohlspiegels, zu lenken, und die Positionserfassungseinrichtung (13) eingerichtet ist, eine Position der Strahlablenkeinrichtung (7) anhand des von dem wenigstens einen optischen Messpunkt (16a - 16c) reflektierten Anteils des optischen Messstrahls (15) zu erfassen.

5. Belichtungseinrichtung nach Anspruch 4, **gekennzeichnet durch** eine mehrere optische Messpunkte (16a - 16c) umfassende optische Messpunktanordnung (16), wobei die der optischen Messpunktanordnung (16) zugehörigen optischen Messpunkte (16a - 16c) in einer definierten räumlichen Anordnung zueinander angeordnet oder ausgebildet sind.

6. Belichtungseinrichtung nach Anspruch 5, **dadurch gekennzeichnet, dass** die der optischen Messpunktanordnung (16) zugehörigen optischen Messpunkte (16a - 16c) in einer gemeinsamen Ebene, insbesondere innerhalb einer Bauebene einer Vorrichtung (2) zur additiven Herstellung dreidimensionaler Objekte (3), angeordnet oder ausgebildet sind oder wenigstens zwei der der optischen Messpunktanordnung (16) zugehörigen optischen Messpunkte (16a - 16c) in unterschiedlichen Ebenen angeordnet oder ausgebildet sind.

7. Belichtungseinrichtung nach einem der vorhergehenden Ansprüche, **gekennzeichnet durch** eine Erfassungseinrichtung (12), welche zur Erfassung eines, insbesondere in einem Schmelzbereich einer selektiv zu verfestigenden oder selektive verfestigten Baumaterialschicht entstehenden, reflektierten Anteils des Energiestrahls (5) eingerichtet ist, wobei der reflektierte Anteil des Energiestrahls (5) über den Strahlengang (9) der Belichtungseinrichtung (1) optisch in die Erfassungseinrichtung (12) einkoppelbar oder eingekoppelt ist, wobei die Erfassungseinrichtung (12) eingerichtet ist, auf Grundlage des über den Strahlengang (9) der Belichtungseinrichtung (1) optisch in die Erfassungseinrichtung (12) eingekoppelten reflektierten Anteils des Energiestrahls (5) zur Erzeugung von die Bauteilqualität eines additiv herzustellenden oder hergestellten dreidimensionalen Objekts (3) beschreibenden Bauteilqualitätsinformationen eingerichtet ist.

8. Belichtungseinrichtung nach Anspruch 7, **dadurch gekennzeichnet, dass** die Messstrahlerzeugungseinrichtung (14) eingerichtet ist, den optischen Messstrahl (15) in einen zwischen der Energiestrahlerzeugungseinrichtung (4) und der Erfassungseinrichtung (12) liegenden Abschnitt des Strahlengangs (9) der Belichtungseinrichtung (1) einzukoppeln, oder die Messstrahlerzeugungseinrichtung (14) eingerichtet ist, den Messstrahl (15) in einen der Erfassungseinrichtung (12) vorgeschalteten Abschnitt des Strahlengangs (9) der Belichtungseinrichtung (1) einzukoppeln.

9. Vorrichtung (2) zur additiven Herstellung dreidimensionaler Objekte (3) durch sukzessives schichtweises selektives Belichten und damit einhergehendes Verfestigen von Baumaterialschichten aus einem verfestigbaren Baumaterial (6) vermittels eines Energiestrahls (5), **dadurch gekennzeichnet, dass** die Vorrichtung (2) eine Belichtungseinrichtung (1) nach einem der vorhergehenden Ansprüche umfasst.

10. Vorrichtung nach Anspruch 9, **gekennzeichnet durch** eine Steuereinrichtung zur Steuerung der vermittels der Belichtungseinrichtung (1) durchzuführenden oder durchgeführten Belichtung jeweiliger Baumaterialschichten auf Grundlage von die selektive Belichtung einer jeweiligen Baumaterialschicht beschreibenden Belichtungsinformationen, wobei die Steuereinrichtung eingerichtet ist, die Belichtungsinformationen in Abhängigkeit einer vermittels der Positionserfassungseinrichtung (13) erzeugten Positionserfassungsinformation zu variieren, insbesondere an eine erfasste Änderung der Position der Strahlablenkeinrichtung (7), insbesondere relativ zu einer Referenzposition, anzupassen.

11. Vorrichtung nach einem der Ansprüche 9 oder 10, **dadurch gekennzeichnet, dass** die Energiestrahlerzeugungseinrichtung (4) zusätzlich als Messstrahlerzeugungseinrichtung (14) ausgebildet ist, wobei ein von der Energiestrahlerzeugungseinrichtung (4) erzeugter Energiestrahl (5) als Messstrahl (15) ausgebildet ist.

12. Vorrichtung nach einem der Ansprüche 9 - 11, **dadurch gekennzeichnet, dass** die Strahlablenkeinrichtung (7) eingerichtet ist, den optischen Messstrahl (15) auf eine zu verfestigende Baumaterialschicht zu lenken, und die Positionserfassungseinrichtung (13) eingerichtet ist, die Schichtdicke der Baumaterialschicht anhand des von der Baumaterialschicht reflektierten Anteils des optischen Messstrahls (15) zu erfassen.

13. Verfahren zur interferometrischen Erfassung der Position einer Strahlablenkeinrichtung (7) einer einen Strahlengang (9) umfassenden Belichtungseinrichtung (1), insbesondere einer Belichtungseinrichtung (1) nach einem der Ansprüche 1 bis 8, einer Vorrichtung (2) zur additiven Herstellung dreidimensionaler Objekte (3) durch sukzessives schichtweises selektives Belichten und damit einhergehendes Verfestigen von Baumaterialschichten aus einem verfestigbaren Baumaterial (6) vermittels eines Energiestrahls (5), insbesondere relativ zu einer Referenzposition, vermittels eines optischen Messstrahls (15), aufweisend die folgenden Schritte:
Erzeugen eines optischen Messstrahls (15),
interferometrisches Erfassen der Position der Strahlablenkeinrichtung (7), insbesondere relativ zu einer Referenzposition, vermittels des optischen Messstrahls (15), insbesondere vermittels eines von wenigstens einem Messpunkt (16a - 16c) reflektierten Anteils des optischen Messstrahls (15),
wobei der optische Messstrahl (15) direkt in den Strahlengang (9) der Belichtungseinrichtung (1) einkoppelbar oder eingekoppelt ist.

## Claims

1. Exposure device (1) for an apparatus (2) for additive manufacture of three-dimensional objects (3) by progressive layer-by-layer selective exposure and, associated therewith, solidification of structural material layers composed of a solidifiable structural material (6) by means of an energy beam (5), wherein the exposure device (1) comprises an energy beam generating device (4) configured for generating an energy beam (5), a beam deflection device (7) configured for deflecting an energy beam (5) generated by the energy beam generating device (4) onto a specific incidence location, and a beam path (9) formed by at least one optically conductive element or comprising at least one such element, comprising
a position detection device (13) configured for interferometrically detecting the position of the beam deflection device (7), in particular relative to a reference position, by means of an optical measurement beam (15), and
a measurement beam generating device (14), which is assigned to the position detection device (13) which is configured for generating the optical measurement beam (15) used for optically detecting the position of the beam deflection device (7), wherein the optical measurement beam (15) generated by the measurement beam generating device (14) can be coupled or is coupled directly into the beam path (9) of the exposure device (1), wherein the position detection device (13) and the measurement beam generating device (14) form an absolute interferometer.

2. Exposure device according to claim 1, **characterised in that** the energy beam generating device (4) and the beam deflection device (7) are optically coupled to one another via the beam path (9).

3. Exposure device according to any one of the preceding claims, **characterised in that** the position detection device (13) is configured to generate position detection information describing a detected position of the beam deflection device (7), in particular relative to a reference position.

4. Exposure device according to any one of the preceding claims, **characterised in that** the beam deflection device (7) is configured to direct the optical measurement beam (15) onto at least one optical measurement point (16a-16c), in particular three optical measurement points (16a-16c), in particular in the form of an optical element, preferably a concave mirror, which reflects the optical measurement beam (15), and the position detection device (13) is configured to detect a position of the beam deflection device (7) on the basis of that portion of the optical measurement beam (15) which is reflected by the at least one optical measurement point (16a-16c).

5. Exposure device according to claim 4, **characterised by** an optical measurement point arrangement (16) comprising a plurality of optical measurement points (16a-16c), wherein the optical measurement points (16a-16c) associated with the optical measurement point arrangement (16) are arranged or embodied in a defined spatial arrangement with respect to one another.

6. Exposure device according to claim 5, **characterised in that** the optical measurement points (16a-16c) associated with the optical measurement point arrangement (16) are arranged or embodied in a common plane, in particular within a structural plane of an apparatus (2) for additive manufacturing of three-dimensional objects (3), or at least two of the optical measurement points (16a-16c) associated with the optical measurement point arrangement (16) are arranged or embodied in different planes.

7. Exposure device according to any one of the preceding claims, **characterised by** a detection device (12) configured for detecting a reflected portion of the energy beam (5), said reflected portion arising in particular in a fusion region of a structural material layer that is to be solidified selectively or is solidified selectively, wherein the reflected portion of the energy beam (5) can be coupled or is coupled optically into the detection device (12) via the beam path (9) of the exposure device (1), wherein the detection device (12) is configured to generate component quality information, describing the component quality of a three-dimensional object (3) that is to be manufactured or is manufactured additively, on the basis of the reflected portion of the energy beam (5) coupled optically into the detection device (12) via the beam path (9) of the exposure device (1).

8. Exposure device according to claim 7, **characterised in that** the measurement beam generating device (14) is configured to couple the optical measurement beam (15) into a portion of the beam path (9) of the exposure device (1) that lies between the energy beam generating device (4) and the detection device (12), or the measurement beam generating device (14) is configured to couple the measurement beam (15) into a portion of the beam path (9) of the exposure device (1) connected upstream of the detection device (12).

9. Apparatus (2) for additive manufacturing of three-dimensional objects (3) by progressive layer-by-layer selective exposure and, associated therewith, solidification of structural material layers composed of a solidifiable structural material (6) by means of energy beam (5), **characterised in that** the apparatus (2) comprises an exposure device (1) according to any one of the preceding claims.

10. Apparatus according to claim 9, **characterised by** a control device for controlling the exposure of respective structural material layers, which exposure is to be carried out or is carried out by means of the exposure device (1), on the basis of exposure information describing the selective exposure of a respective structural material layer, wherein the control device is configured to vary the exposure information depending on position detection information generated by means of the position detection device (13), in particular to adapt said exposure information to a detected change in the position of the beam deflection device (7), in particular relative to a reference position.

11. Apparatus according to any one of claims 9 or 10, **characterised in that** the energy beam generating device (4) is additionally embodied as a measurement beam generating device (14), wherein an energy beam (5) generated by the energy beam generating device (4) is embodied as a measurement beam (15).

12. Apparatus according to any one of claims 9-11, **characterised in that** the beam deflection device (7) is configured to direct the optical measurement beam (15) onto a structural material layer to be solidified, and the position detection device (13) is configured to detect the layer thickness of the structural material layer on the basis of that portion of the optical measurement beam (15) which is reflected by the structural material layer.

13. Method for interferometrically detecting the position of a beam deflection device (7) of an exposure device (1) comprising a beam path (9), in particular of an exposure device (1) according to any one of claims 1 to 8, of an apparatus (2) for additive manufacturing of three-dimensional objects (3) by progressive layer-by-layer selective exposure and, associated therewith, solidification of structural material layers composed of a solidifiable structural material (6) by means of an energy beam (5), in particular relative to a reference position, by means of an optical measurement beam (15), having the following steps:
generating an optical measurement beam (15),
interferometrically detecting the position of the beam deflection device (7), in particular relative to a reference position, by means of the optical measurement beam (15), in particular by means of a portion of the optical measurement beam (15) that is reflected by at least one measurement point (16a-16c),
wherein the optical measurement beam (15) can be coupled or is coupled directly into the beam path (9) of the exposure device (1).

## Revendications

1. Système d'irradiation (1) pour un dispositif (2) de fabrication additive d'objets tridimensionnels (3) par irradiation sélective par couches successive et par solidification allant de pair de couches de matériau de construction composées d'un matériau de construction (6) pouvant être solidifié au moyen d'un faisceau d'énergie (5), dans lequel le système d'irradiation (1) comprend un système de production de faisceau d'énergie (4), lequel est mis au point pour produire un faisceau d'énergie (5), un système de déviation de faisceau (7), lequel est mis au point pour dévier un faisceau d'énergie (5) produit par le système de production de faisceau d'énergie (4) sur un emplacement d'émission de rayonnement donné, ainsi qu'un chemin optique (9) formé par au moins un élément conducteur optiquement ou comprenant au moins un élément de ce type, présentant
un système de détection de position (13), lequel est mis au point pour détecter par interférométrie la position du système de déviation de faisceau (7), en particulier par rapport à une position de référence, au moyen d'un faisceau de mesure optique (15), ainsi
qu'un système de production de faisceau de mesure (14) associé au système de détection de position (13), lequel est mis au point pour produire le faisceau de mesure optique (15) utilisé pour détecter de manière optique la position du système de déviation de faisceau (7), dans lequel le faisceau de mesure optique (15) produit par le système de production de faisceau de mesure (14) peut être injecté ou est injecté directement dans le chemin optique (9) du système d'irradiation (1), dans lequel le système de détection de position (13) et le système de production de faisceau de mesure (14) forment un interféromètre absolu.

2. Système d'irradiation selon la revendication 1, **caractérisé en ce que** le système de production de faisceau d'énergie (4) et le système de déviation de faisceau (7) sont couplés optiquement l'un à l'autre par l'intermédiaire du chemin optique (9).

3. Système d'irradiation selon l'une quelconque des revendications précédentes, **caractérisé en ce que** le système de détection de position (13) est mis au point pour produire une information de détection de position décrivant, en particulier par rapport à une position de référence, une position détectée du système de déviation de faisceau (7).

4. Système d'irradiation selon l'une quelconque des revendications précédentes, **caractérisé en ce que** le système de déviation de faisceau (7) est mis au point pour diriger le faisceau de mesure optique (15) sur au moins un point de mesure (16a - 16c) optique, en particulier trois points de mesure (16a - 16c) optiques, en particulier sous la forme d'un élément optique réfléchissant le faisceau de mesure optique (15), de manière préférée d'un miroir concave, et le système de détection de position (13) est mis au point pour détecter une position du système de déviation de faisceau (7) à l'aide de la part du faisceau de mesure optique (15) réfléchie à l'aide de l'au moins un point de mesure (16a - 16c) optique.

5. Système d'irradiation selon la revendication 4, **caractérisé par** un ensemble de points de mesure (16) optique comprenant plusieurs points de mesure (16a - 16c) optiques, dans lequel les points de mesure (16a - 16c) optiques appartenant à l'ensemble de points de mesure (16) optique sont disposés ou réalisés selon un agencement spatial défini les uns par rapport aux autres.

6. Système d'irradiation selon la revendication 5, **caractérisé en ce que** les points de mesure (16a - 16c) optiques associés à l'ensemble de points de mesure (16) optique sont disposés ou réalisés dans un plan commun, en particulier à l'intérieur d'un plan de construction d'un dispositif (2) de fabrication additive d'objets tridimensionnels (3) ou au moins deux des points de mesure (16a - 16c) optiques associés à l'ensemble de points de mesure (16) optique sont disposés ou réalisés dans des plans différents.

7. Système d'irradiation selon l'une quelconque des revendications précédentes, **caractérisé par** un système de détection (12), lequel est mis au point pour détecter une part du faisceau d'énergie (5) réfléchie se formant en particulier dans une zone de fusion d'une couche de matériau de construction à solidifier ou solidifiée de manière sélective, dans lequel la part du faisceau d'énergie (5) réfléchie peut être injectée ou est injectée de manière optique dans le système de détection (12) par l'intermédiaire du chemin optique (9) du système d'irradiation (1), dans lequel le système de détection (12) est mis au point pour produire des informations de qualité du composant décrivant la qualité de composant d'un objet tridimensionnel (3) à fabriquer ou fabriqué de manière additive sur la base de la part du faisceau d'énergie (5) réfléchie injectée de manière optique dans le système de détection (12) sur le chemin optique (9) du système d'irradiation (1).

8. Système d'irradiation selon la revendication 7, **caractérisé en ce que** le système de production de faisceau de mesure (14) est mis au point pour injecter le faisceau de mesure optique (15) dans une portion du chemin optique (9) du système d'irradiation (1) située entre le système de production de faisceau d'énergie (4) et le système de détection (12), ou le système de production de faisceau de mesure (14) est mis au point pour injecter le faisceau de mesure (15) dans une portion du chemin optique (9) du système d'irradiation (1) placée en amont du système de détection (12).

9. Dispositif (2) de fabrication additive d'objets tridimensionnels (3) par irradiation sélective par couches successive et par solidification allant de pair de couches de matériau de construction composées d'un matériau de construction (6) pouvant être solidifié au moyen d'un faisceau d'énergie (5), **caractérisé en ce que** le dispositif (2) comprend un système d'irradiation (1) selon l'une quelconque des revendications précédentes.

10. Dispositif selon la revendication 9, **caractérisé par** un système de commande pour commander l'irradiation à effectuer ou effectuée au moyen du système d'irradiation (1) de couches de matériau de construction respectives sur la base d'informations d'irradiation décrivant l'irradiation sélective d'une couche de matériau de construction respective, dans lequel le système de commande est mis au point pour faire varier les informations d'irradiation en fonction d'une information de détection de position produite au moyen du système de détection de position (13), en particulier pour l'adapter à une modification détectée de la position du système de déviation de faisceau (7), en particulier par rapport à une position de référence.

11. Dispositif selon l'une quelconque des revendications 9 ou 10, **caractérisé en ce que** le système de production de faisceau d'énergie (4) est réalisé en supplément en tant que système de production de faisceau de mesure (14), dans lequel un faisceau d'énergie (5) produit par le système de production de faisceau d'énergie (4) est réalisé en tant que faisceau de mesure (15).

12. Dispositif selon l'une quelconque des revendications 9 - 11, **caractérisé en ce que** le système de déviation de faisceau (7) est mis au point pour diriger le faisceau de mesure optique (15) sur une couche de matériau de construction à solidifier, et le système de détection de position (13) est mis au point pour détecter l'épaisseur de couche de la couche de matériau de construction à l'aide de la part du faisceau de mesure optique (15) réfléchie par la couche de matériau de construction.

13. Procédé de détection par interférométrie de la position d'un système de déviation de faisceau (7) d'un système d'irradiation (1) comprenant un chemin optique (9), en particulier d'un système d'irradiation (1) selon l'une quelconque des revendications 1 à 8, d'un dispositif (2) de fabrication additive d'objets tridimensionnels (3) par irradiation sélective par couches successive et par solidification allant de pair de couches de matériau de construction composées d'un matériau de construction (6) pouvant être solidifié au moyen d'un faisceau d'énergie (5), en particulier par rapport à une position de référence, au moyen d'un faisceau de mesure optique (15), présentant les étapes suivantes :
de production d'un faisceau de mesure optique (15),
de détection par interférométrie de la position du système de déviation de faisceau (7), en particulier par rapport à une position de référence, au moyen du faisceau de mesure optique (15), en particulier au moyen d'une part du faisceau de mesure optique (15) réfléchie par au moins un point de mesure (16a - 16c),
dans lequel le faisceau de mesure optique (15) peut être injecté ou est injecté directement sur le chemin optique (9) du système d'irradiation (1).
